# EUROPEAN PATENT APPLICATION

(11) **EP 4 113 789 A1**
(43) Date of publication of application: **04.01.2023**
(21) Application number: 20921691.0
(22) Date of filing: 26.02.2020
(51) Int. Cl.: H02K 1/04

(54) **ELECTRIC MOTOR, BLOWER, AND AIR CONDITIONER**

(71) Applicant: MITSUBISHI ELECTRIC CORPORATION, Chiyoda-ku Tokyo 100-8310 (JP)
(72) Inventor: TAKAHASHI, Ryogo, Tokyo 100-8310 (JP); ASO, Hiroki, Tokyo 100-8310 (JP); TSUCHIDA, Kazuchika, Tokyo 100-8310 (JP); WATANABE, Takanori, Tokyo 100-8310 (JP); SHIMOKAWA, Takaya, Tokyo 100-8310 (JP)
(74) Representative: Pfenning, Meinig & Partner mbB
(86) International application number: PCT/JP2020/007776
(87) International publication number: WO 2021/171426

(57) **Abstract**

A motor has a rotor, a stator surrounding the rotor, a reinforcing member, and a mold resin part covering the stator and the reinforcing member. The tensile strength of the reinforcing member is higher than the tensile strength of the mold resin part.

## Description

### TECHNICAL FIELD

The present disclosure relates to a motor, a fan, and an air conditioner.

### BACKGROUND ART

Conventionally, there is a motor that includes a stator covered with a mold resin part (see, for example, Patent Reference 1).

### PRIOR ART REFERENCE

### PATENT REFERENCE

Patent Reference 1: Internal Publication WO 2018/179025 (see FIG. 1)

### SUMMARY OF THE INVENTION

### PROBLEM TO BE SOLVED BY THE INVENTION

In order to reduce vibration and noise of such a motor, it is proposed to increase the strength of the mold resin part. However, in such a case, the use amount of resin increases, and thus the manufacturing cost increases.

The present disclosure is intended to solve the above-described problem, and an object of the present disclosure is to reduce vibration and noise of the motor.

### MEANS OF SOLVING THE PROBLEM

A motor of the present disclosure includes a rotor, a stator surrounding the rotor, a reinforcing member, and a mold resin part covering the stator and the reinforcing member. The tensile strength of the reinforcing member is higher than the tensile strength of the mold resin part.

Alternatively, a motor of the present disclosure includes a rotor, a stator surrounding the rotor, a reinforcing member, and a mold resin part covering the stator and the reinforcing member. The elastic modulus of the reinforcing member is lower than the elastic modulus of the mold resin part.

### EFFECTS OF THE INVENTION

In the present disclosure, by using the reinforcing member whose tensile strength is higher than that of the mold resin part, resistance to vibration is improved, and thus vibration and noise of the motor can be reduced. Alternately, by using of the reinforcing member whose elastic modulus is lower than that of the mold resin part, vibration is absorbed by the reinforcing member, and thus vibration and noise of the motor can be reduced.

### BRIEF DESCRIPTION OF THE DRAWINGS

FIG. 1 is a partial sectional view illustrating a motor of a first embodiment.
FIG. 2 is a sectional view illustrating a rotor of the first embodiment.
FIG. 3 is a sectional view illustrating a mold stator of the first embodiment.
FIGS. 4(A) and 4(B) are a plan view and a side view illustrating a stator of the first embodiment.
FIGS. 5(A) and 5(B) are a plan view and a side view illustrating the stator, a circuit board, and a board holding member of the first embodiment.
FIG. 6 is a side view illustrating the stator, the circuit board, the board holding member, and a reinforcing member of the first embodiment.
FIGS. 7(A) and 7(B) are a plan view and a side view illustrating the mold stator of the first embodiment.
FIG. 8 is a sectional view illustrating a mold used in a manufacturing process of the motor of the first embodiment.
FIG. 9 is a flowchart illustrating the manufacturing process of the motor of the first embodiment.
FIG. 10 is a partial sectional view illustrating a motor of a second embodiment.
FIG. 11 is a sectional view illustrating a mold stator of the second embodiment.
FIG. 12 is a diagram illustrating a mold stator of a third embodiment.
FIG. 13 is a diagram illustrating a stator of a fourth embodiment.
FIG. 14 is a sectional view illustrating a rotor of a fifth embodiment.
FIG. 15(A) is a diagram illustrating an air conditioner to which the motor of each embodiment is applicable, and FIG. 15(B) is a sectional view illustrating an outdoor unit.

### MODE FOR CARRYING OUT THE INVENTION

### First Embodiment

### (Configuration of Motor 1)

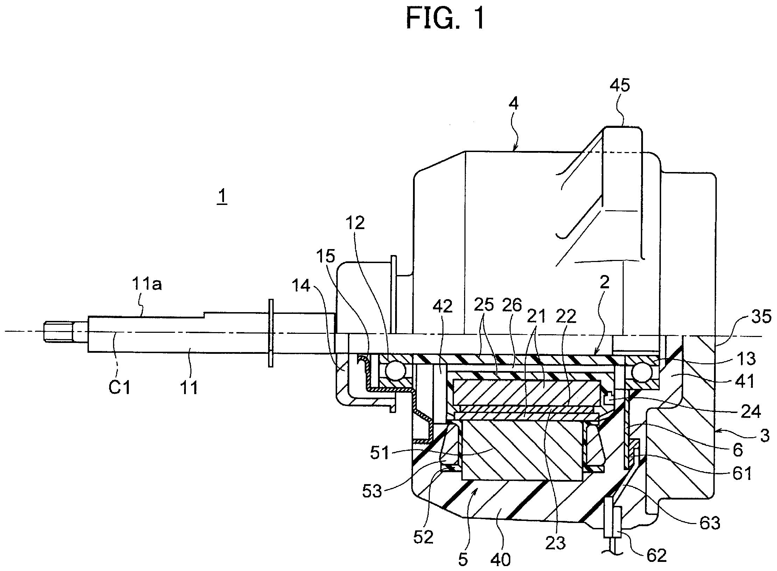

FIG. 1 is a partial sectional view illustrating a motor 1 in a first embodiment. The motor 1 is used, for example, in a fan of an air conditioner.

The motor 1 includes a rotor 2 having a shaft 11, and a mold stator 4. The mold stator 4 has an annular stator 5 surrounding the rotor 2, a circuit board 6, a reinforcing member 3, and a mold resin part 40 covering these components. The shaft 11 is a rotational shaft of the rotor 2.

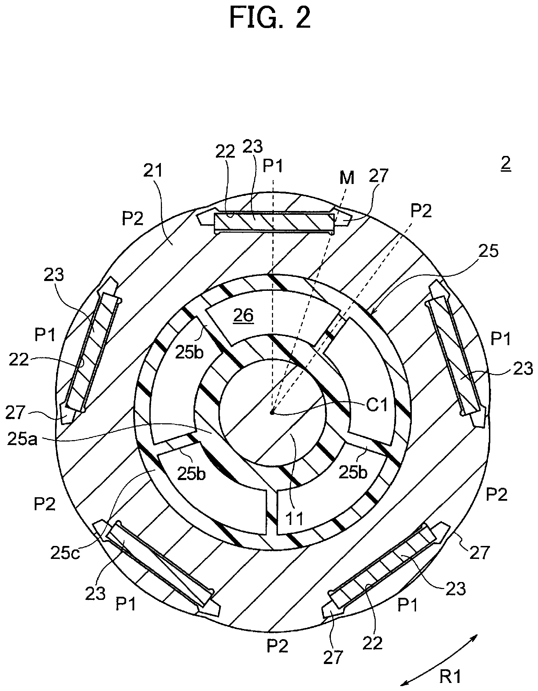

In the description below, the direction of the axis C1, which is the center axis of the shaft 11, is referred to as an "axial direction". The circumferential direction about the axis C1 of the shaft 11 is referred to as a "circumferential direction" and indicated by an arrow R1 in FIG. 2 and other figures. The radial direction about the axis C1 of the shaft 11 is referred to as a "radial direction".

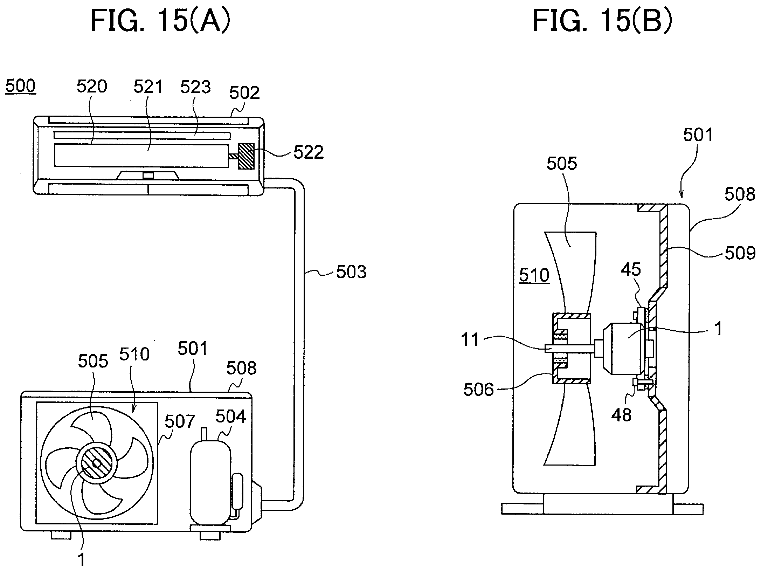

The shaft 11 protrudes from the mold stator 4 to the left in FIG. 1. An impeller 505 (FIG. 15(A)) of a fan, for example, is attached to an attachment portion 11a formed in a protruding portion of the shaft. Therefore, the protruding side (the left side in FIG. 1) of the shaft 11 is referred to as a "load side", while the opposite side (the right side in FIG. 1) is referred to as a "counter-load side".

### (Configuration of Rotor 2)

FIG. 2 is a sectional view illustrating the rotor 2. As illustrated in FIG. 2, the rotor 2 has the shaft 11, a rotor core 21 disposed on the outer side of the shaft 11 in the radial direction, a plurality of magnets 23 embedded in the rotor core 21, and a resin part 25 provided between the shaft 11 and the rotor core 21.

The rotor core 21 is a member having an annular shape about the axis C1 and is provided on the outer side of the shaft 11 in the radial direction. The rotor core 21 is formed of a plurality of electromagnetic steel sheets which are stacked in the axial direction and fixed together in the axial direction by crimping, welding, or bonding. The sheet thickness of each electromagnetic steel sheet is, for example, 0.1 mm to 0.7 mm.

The rotor core 21 has a plurality of magnet insertion holes 22. The magnet insertion holes 22 are arranged at equal intervals in the circumferential direction and at equal distances from the axis C1. The number of magnet insertion holes 22 is five in this example.

The magnet insertion hole 22 extends linearly in a direction orthogonal to a straight line extending in the radial direction and passing through a center of the magnetic insertion hole in the circumferential direction. In this regard, the magnet insertion hole 22 may have a V shape such that its center in the circumferential direction protrudes toward the axis C1 side.

A flux barrier 27, which is a cavity, is formed on each side of the magnet insertion hole 22 in the circumferential direction. A thin wall portion is formed between the flux barrier 27 and an outer circumference of the rotor core 21. In order to suppress leakage magnetic flux between adjacent magnetic poles, the thickness of the thin wall portion is set, for example, equal to the sheet thickness of the electromagnetic steel sheet.

The magnet 23, which is a permanent magnet, is inserted in each magnet insertion hole 22. The magnet 23 is made of, for example, a rare earth magnet that contains neodymium (Nd), iron (Fe) and boron (B), or a rare earth magnet that contains samarium (Sm), iron and nitrogen (N). The magnet 23 is in the form of a flat plate and has a rectangular cross-sectional shape in a plane orthogonal to the axial direction. The magnet 23 is also referred to as a main magnet.

Five magnets 23 have the same magnetic poles on their outer sides in the radial direction. In the rotor core 21, magnetic poles opposite to the magnets 23 are formed in regions each between the magnets 23 adjacent in the circumferential direction.

Therefore, five magnet magnetic poles P1 formed by the magnets 23 and five virtual magnetic poles P2 formed by the rotor core 21 are arranged alternately in the circumferential direction in the rotor 2. Such a rotor 2 is referred to as a consequent-pole rotor.

Hereinafter, when the term "magnetic pole" is simply used, it refers to either the magnet magnetic pole P1 or the virtual magnetic pole P2. The number of poles in the rotor 2 is 10. The magnetic poles P1 and P2 of the rotor 2 are arranged at equal angular intervals in the circumferential direction. A boundary between the magnet magnetic pole P1 and the virtual magnetic pole P2 defines a pole-boundary M.

The outer circumference of the rotor core 21 has a so-called flower shape in a plane orthogonal to the axial direction. In other words, the outer circumference of the rotor core 21 has its outer diameter maximum at the pole center of each of the magnetic poles P1 and P2 and minimum outer diameter at each pole-boundary M, and extends in an arc shape from the pole center to the pole-boundary M. The outer circumference of the rotor core 21 is not limited to the flower shape but may be a circular shape.

Although the number of poles of the rotor 2 is 10 in this example, it is sufficient that the number of poles of the rotor 2 is an even number of 4 or more. Moreover, although one magnet 23 is disposed in each magnet insertion hole 22, two or more magnets 23 may be disposed in each magnet insertion hole 22.

The nonmagnetic resin part 25 is provided between the shaft 11 and the rotor core 21. The resin part 25 holds the shaft 11 and the rotor core 21 in a state where the shaft 11 and the rotor core 21 are separated from each other. The resin part 25 is desirably made of a thermoplastic resin such as polybutylene terephthalate (PBT).

The resin part 25 includes an annular inner cylindrical portion 25a fixed to the shaft 11, an annular outer cylindrical portion 25c fixed to an inner circumference of the rotor core 21, and a plurality of ribs 25b connecting the inner cylindrical portion 25a and the outer cylindrical portion 25c. The ribs 25b are arranged at equal intervals in the circumferential direction. The number of ribs 25b is, for example, half the number of poles, and is five in this example.

The shaft 11 is fixed to the inside of the inner cylindrical portion 25a of the resin part 25. The ribs 25b are arranged at equal intervals in the circumferential direction and radially extend outward in the radial direction from the inner cylindrical portion 25a. Hollow portions 26 are formed each between the ribs 25b adjacent in the circumferential direction. In this example, the number of ribs 25b is half the number of poles, and the positions of the ribs 25b in the circumferential direction coincide with the pole centers of the virtual magnetic poles P2, but the number and arrangement of the ribs 25b are not limited thereto.

As illustrated in FIG. 1, a sensor magnet 24 is disposed to face the rotor core 21 in the axial direction. The sensor magnet 24 is held by the resin part 25. The magnetic field of the sensor magnet 24 is detected by a magnetic sensor mounted on the circuit board 6, by which the position of the rotor 2 in the circumferential direction, i.e., the rotational position of the rotor 2 is detected.

### (Configuration of Mold Stator 4)

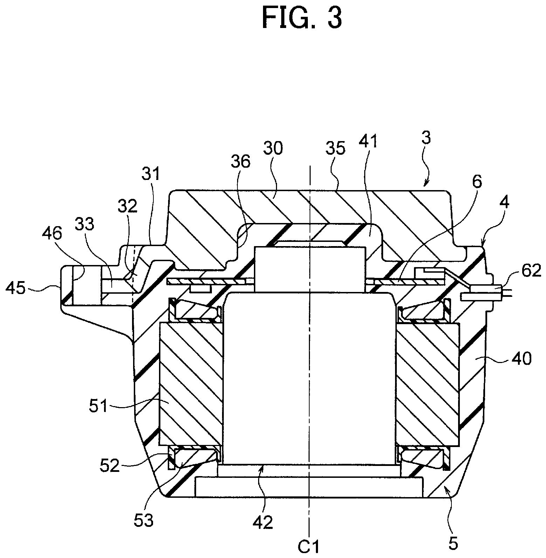

FIG. 3 is a sectional view illustrating the mold stator 4. The mold stator 4 has the stator 5, the circuit board 6, the reinforcing member 3, and the mold resin part 40 as described above. The stator 5 has a stator core 51, an insulating portion 52 provided on the stator core 51, and coils 53 wound on the stator core 51 via the insulating portion 52.

The stator core 51 is formed of a plurality of electromagnetic steel sheets which are stacked in the axial direction and fixed together in the axial direction by crimping, welding, or bonding. The sheet thickness of each electromagnetic steel sheet is, for example, 0.1 mm to 0.7 mm.

The mold resin part 40 is formed of a mold resin, for example, a thermosetting resin such as a bulk molding compound (BMC). BMC contains unsaturated polyester as a main component to which a reinforcing material such as glass fiber is added. The mold resin part 40 may be formed of a thermoplastic resin such as PBT.

The mold resin part 40 includes a bearing support portion 41 on the counter-load side and an opening 42 on the load side. The rotor 2 (FIG. 1) is inserted into a hollow portion inside the mold stator 4 through the opening 42.

With reference to FIG. 1 again, a metal bracket 15 is attached to the opening 42 of the mold resin part 40. One bearing 12 supporting the shaft 11 is held by the bracket 15. A cap 14 for preventing entry of water or the like is attached to the outside of the bracket 15. The bearing support portion 41 of the mold resin part 40 has an inner circumferential surface having a cylindrical shape. On the inner circumferential surface, the other bearing 13 supporting the shaft 11 is held.

The mold resin part 40 has attachment legs 45 attached to a motor support 10. Four attachment legs 45 are provided at intervals of 90 degrees about the axis C1 as described later.

Each attachment leg 45 of the mold resin part 40 has an attachment portion 46 which is a hole. The attachment legs 45 of the mold resin part 40 are fixed, for example, to a frame 509 of an outdoor unit 501 by screws 48 (FIG. 15(B)).

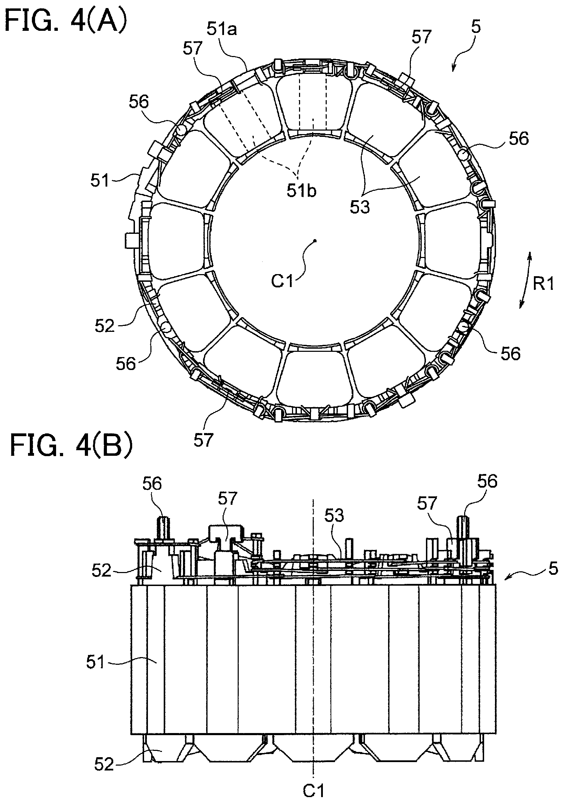

FIG. 4(A) is a plan view illustrating the stator core 51, the insulating portion 52, and the coils 53. FIG. 4(B) is a side view illustrating the stator core 51, the insulating portion 52, and the coils 53. The stator core 51 has a yoke 51a having an annular shape about the axis C1 and a plurality of teeth 51b extending inward in the radial direction from the yoke 51a. The number of teeth 51b is 12 in this example, but is not limited to 12. In FIG. 4(A), two teeth 51b are indicated by dashed lines.

The coil 53 is, for example, a magnet wire, and is wound around the tooth 51b via the insulating portion 52. The insulating portion 52 is made of, for example, a thermoplastic resin such as PBT. The insulating portion 52 is formed by integrally molding the thermoplastic resin with the stator core 51 or by assembling a molded body of the thermoplastic resin to the stator core 51.

The insulating portion 52 has wall portions on the inner and outer sides of the coils 53 in the radial direction, and the wall portions guide the coils 53 from both sides in the radial direction. A plurality of terminals 57 are attached to the insulating portion 52. The ends of coils 53 are connected to the terminals 57, for example, by fusing (thermal caulking), soldering or the like.

Further, the insulating portion 52 is provided with a plurality of protrusions 56 for fixing the circuit board 6. The protrusions 56 are inserted through attachment holes formed in the circuit board 6.

With reference to FIG. 1 again, the circuit board 6 is disposed on the counter-load side of the stator 5. The circuit board 6 is a printed board on which a drive circuit 61 such as a power transistor for driving the motor 1 is mounted. Lead wires 63 are wired on the circuit board 6. The lead wires 63 on the circuit board 6 are drawn out to the outside of the motor 1 through a lead wire outlet component 62 attached to an outer circumferential portion of the mold resin part 40.

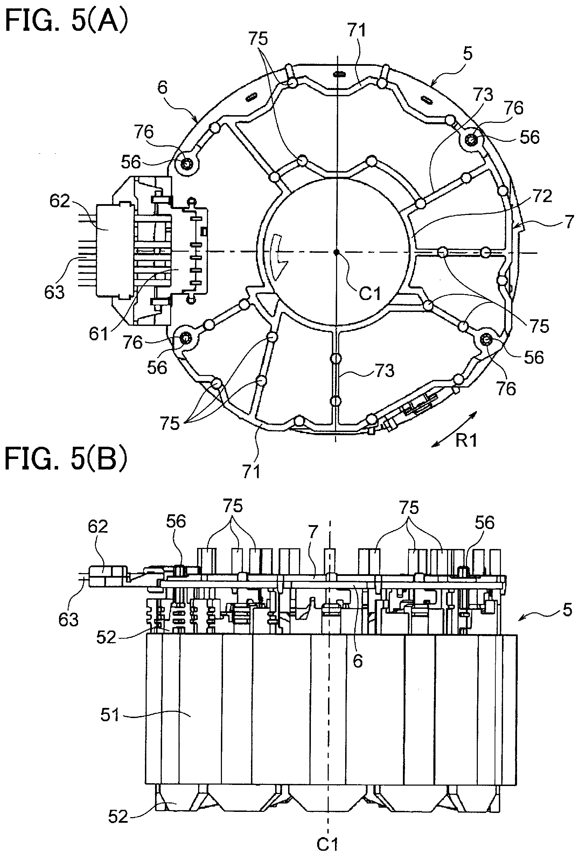

FIG. 5(A) is a plan view illustrating the stator 5, the circuit board 6, and a board holding member 7. FIG. 5(B) is a side view illustrating the stator 5, the circuit board 6, and the board holding member 7. The circuit board 6 is disposed so that a surface of the circuit board 6 is orthogonal to the axial direction. An opening for providing a space to house the bearing 13 (FIG. 1) is formed at the center of the circuit board 6 in the radial direction. The above-described lead wire outlet component 62 is attached to an outer circumferential portion of the circuit board 6.

The board holding member 7 as a support member is provided on a side opposite to the stator 5 with respect to the circuit board 6. The board holding member 7 is provided to suppress deformation of the circuit board 6 during molding. The board holding member 7 is made of, for example, a resin such as PBT.

The board holding member 7 includes a rib 71 extending along an outer circumference of the circuit board 6, a rib 72 extending along an inner circumference of the circuit board 6, and ribs 73 connecting these ribs 71 and 72, thereby forming a framework. In this regard, the shape of the board holding member 7 is not limited to such a shape.

The board holding member 7 has attachment holes 76 through which the protrusions 56 of the insulating portion 52 are inserted. The insulating portions 52 protrude through the attachment holes 76 in the axial direction. By thermally or ultrasonically welding the protruding tips of the protrusions 56, the circuit board 6 and the board holding member 7 are fixed to the stator 5.

The board holding member 7 has a plurality of convex portions 75 protruding on a side opposite to the stator 5. The convex portions 75 are formed on the ribs 71, 72, and 73, and are arranged so as to be distributed across the whole board holding member 7. The convex portions 75 are support portions that support the reinforcing member 3. In this regard, the board holding member 7 is not illustrated in FIGS. 1 to 3.

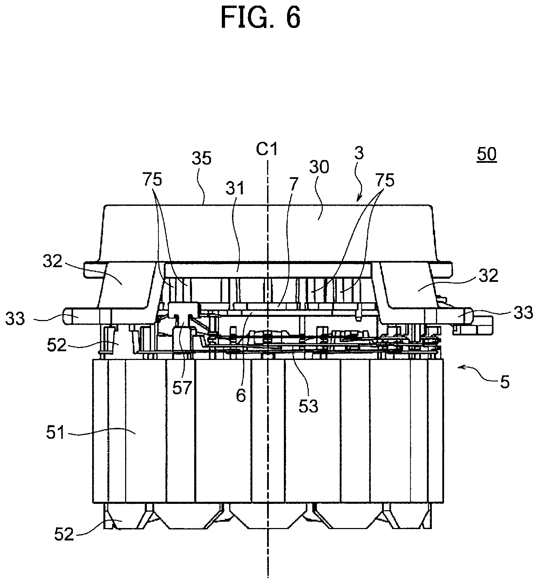

FIG. 6 is a side view illustrating the stator 5, the circuit board 6, the board holding member 7, and the reinforcing member 3. The reinforcing member 3 is supported by the convex portions 75 of the board holding member 7. The stator 5, the circuit board 6, the board holding member 7, and the reinforcing member 3 constitute a stator assembly 50.

The reinforcing member 3 is formed of, for example, a metal, more specifically iron or aluminum. The reinforcing member 3 has a main portion 30, a flange portion 31, and leg portions 32. The main portion 30 is a plate-shaped portion having a circular shape in a plane orthogonal to the axial direction. The flange portion 31 is located on the stator 5 side with respect to the main portion 30, and is formed in an annular shape along an outer circumference of the main portion 30. The leg portions 32 extend outward in the radial direction from the flange portion 31.

With reference to FIG. 3 again, the reinforcing member 3 has a surface 35 on the side opposite to the stator 5 in the axial direction and also has a recess 36 on the stator 5 side. The surface 35 is a plane orthogonal to the axial direction, for example. The recess 36 is a portion in which the bearing 13 (FIG. 1) is housed.

A part of the reinforcing member 3, the stator 5, the circuit board 6, and the board holding member 7 are covered with the mold resin part 40 (FIG. 1) to constitute the mold stator 4. The leg portions 32 of the reinforcing member 3 are covered with the mold resin part 40. Meanwhile, the surface 35 and an outer circumferential surface of the main portion 30 of the reinforcing member 3 and the surface of the flange portion 31 are exposed from the mold resin part 40.

A portion of the reinforcing member 3 covered with the mold resin part 40 is also referred to as a first portion. The first portion includes, for example, the leg portions 32. A portion of the reinforcing member 3 which is exposed from the mold resin part 40 is also referred to as a second portion. The second portion includes, for example, the surface 35 and the outer circumferential surface of the main portion 30 and the surface of the flange portion 31.

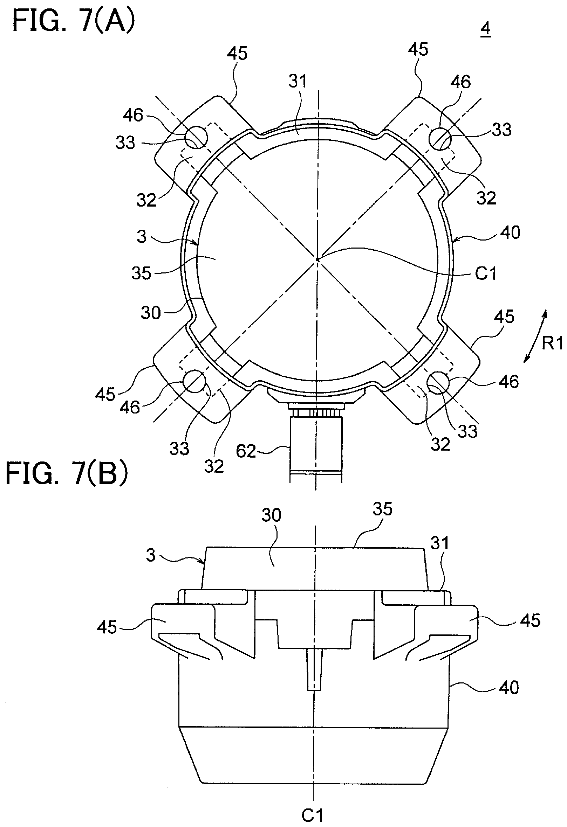

FIGS. 7 (A) and 7(B) are a plan view and a side view illustrating the mold stator 4. As illustrated in FIG. 7(A), the mold resin part 40 has the plurality of attachment legs 45 arranged at equal distances from the axis C1. In this example, four attachment legs 45 are formed at intervals of 90 degrees about the axis C1. In this regard, the number of attachment legs 45 is not limited to four.

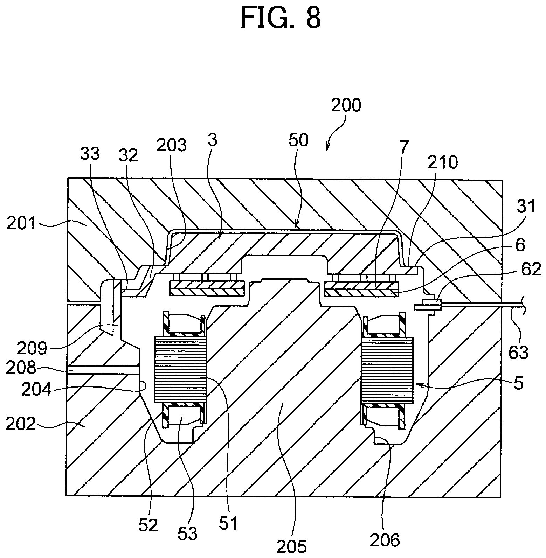

The attachment leg 45 has the attachment portion 46 which is a hole. The attachment portion 46 is a part through which the screw 48 for fixing the motor 1 (FIG. 15(B)) is inserted. The attachment portion 46 is formed because a resin does not flow into an area where a positioning pin 209 of a mold 200 (FIG. 8) is present during molding.

An inner circumferential surface of the attachment portion 46 has a circular shape in a plane orthogonal to the axial direction. The inner circumferential surface of the attachment portion 46 is parallel to the axial direction. The attachment portion 46 is not limited to the hole, but may be a concave portion. In such a case, an inner circumferential surface of the concave portion is desirably arc-shaped in a plane orthogonal to the axial direction.

The plurality of leg portions 32 extend outward in the radial direction from the flange portion 31 of the reinforcing member 3. The leg portions 32 are arranged at equal distances from the axis C1 and at equal intervals about the axis C1.

In this example, the leg portions 32, the number of which is the same as the number of attachment legs 45 of the mold resin part 40, are formed in positions corresponding to the attachment legs 45. That is, the four leg portions 32 are formed at intervals of 90 degrees about the axis C1.

An attachment portion 33, which is a concave portion, is formed at the tip end of each leg portion 32, i.e., the end of each leg portion 32 on the outer side in the radial direction. The attachment portion 33 of the leg portion 32 is formed at a position that overlaps the attachment portion 46 of the attachment leg 45 in the axial direction.

An inner circumferential surface of the attachment portion 33 has an arc shape, more specifically a semicircular shape, in a plane orthogonal to the axial direction. The inner circumferential surface of the attachment portion 33 is parallel to the axial direction. The attachment portion 33 is brought into contact with the positioning pin 209 of the mold 200 (FIG. 8) and thereby functions to position the reinforcing member 3 in the circumferential direction. In this regard, the attachment portion 33 is not limited to the concave portion, but may be a hole. In such a case, an inner circumferential surface of the hole is desirably circular in a plane orthogonal to the axial direction.

### (Manufacturing Method of Motor 1)

Next, a manufacturing process of the motor 1 will be described. FIG. 8 is a sectional view illustrating the mold 200 used in the manufacturing process of the motor 1. The mold 200 has an upper mold 201 and a lower mold 202 that can be opened and closed. A cavity 204 is formed between both molds 201 and 202. The lower mold 202 is provided with a gate 208. The gate 208 is a flow passage through which a resin is injected into the cavity 204.

The upper mold 201 is provided with a reinforcing member housing 203 for housing the reinforcing member 3. Further, the upper mold 201 has a contact surface 210 which is brought in contact with the flange portion 31 of the reinforcing member 3.

The lower mold 202 is provided with a columnar core 205 that protrudes within the cavity 204. The core 205 is a portion that engages with the inner side of the stator core 51. A larger-diameter portion 206 overhanging outward in the radial direction from the core 205 is formed at a lower end of the core 205. The larger-diameter portion 206 is a portion corresponding to the opening 42 (FIG. 3) of the mold stator 4.

The lower mold 202 is provided with the positioning pins 209 as positioning members that are engaged with the attachment portions 33 of the reinforcing member 3. The positioning pins 209 extend in the axial direction within the cavity 204.

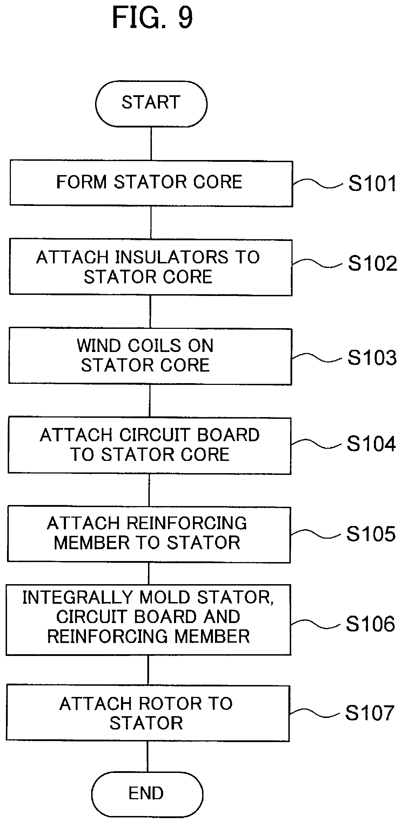

FIG. 9 is a flowchart illustrating a manufacturing process of the motor 1. First, a plurality of electromagnetic steel sheets are stacked in the axial direction and fixed together by crimping or the like, thereby forming the stator core 51 (step S101). Then, the insulating portion 52 is attached to or molded integrally with the stator core 51 (step S102). Furthermore, the coils 53 are wound on the stator core 51 via the insulating portion 52 (step S103). In this way, the stator 5 is formed.

Then, the circuit board 6 and the board holding member 7 are attached to the stator 5 (step S104). At this time, the protrusions 56 (FIG. 5(B)) of the insulating portion 52 of the stator 5 are inserted through the attachment holes of the circuit board 6 and the attachment holes 76 of the board holding member 7 (FIG. 5(A)), and then the tips of the protrusions 56 are welded thereto thermally or the like, whereby the circuit board 6 and the board holding member 7 are fixed to the stator 5.

Then, the reinforcing member 3 is attached to the board holding member 7 on the stator 5 (step S105). The reinforcing member 3 is supported in a state where the reinforcing member 3 is placed on the convex portions 75 of the board holding member 7. Thus, the stator assembly 50 (FIG. 6), which is formed of the stator 5, the circuit board 6, the board holding member 7, and the reinforcing member 3, is obtained.

Next, the stator assembly 50 is placed in the mold 200, and molding is performed (step S106).

Specifically, first, the upper mold 201 of the mold 200 is moved upward to open the cavity 204, and the stator assembly 50 is placed in the cavity 204. At this time, the positioning pins 209 of the mold 200 are engaged with the attachment portions 33 of the reinforcing member 3, thereby positioning the stator assembly 50 within the cavity 204.

Since the plurality of attachment portions 33 of the reinforcing member 3 are formed at equal distances from the axis C1 and at equal intervals in the circumferential direction, the position of the stator assembly 50 in the circumferential direction can be changed in a plurality of ways in the cavity 204. A part of the lead wire outlet component 62 and a part of the lead wires 63 protrude to the outside of the cavity 204.

After the stator assembly 50 is placed in the cavity 204, the upper mold 201 is moved downward to close the cavity 204, and then a mold resin in a molten state is injected into the cavity 204 through the gate 208. The mold resin injected into the cavity 204 covers the stator assembly 50.

In a case where a thermosetting resin is used as the mold resin, the mold resin is injected into the cavity 204, and then the mold 200 is heated so as to harden the mold resin in the cavity 204. In this way, the mold stator 4 in which the stator assembly 50 is covered with the mold resin part 40 is formed.

In this regard, in the mold resin part 40 of the mold stator 4, the resin does not flow into portions where the positioning pins 209 are present, and thus the attachment portions 46 (FIG. 7(A)) are formed.

Aside from steps S101 to S106, the rotor 2 is formed. That is, a plurality of electromagnetic steel sheets are stacked and fixed together in the axial direction by crimping or the like to form the rotor core 21. Then, the magnets 23 are inserted into the magnet insertion holes 22. Furthermore, the shaft 11, the rotor core 21, the magnets 23, and the sensor magnet 24 are integrally molded with a resin which is to be the resin part 25. In this way, the rotor 2 is formed.

Thereafter, the bearings 12 and 13 are attached to the shaft 11 of the rotor 2, and the rotor 2 is inserted into the inside of the stator 5 through the opening 42 of the mold stator 4 (step S107). Further, the bracket 15 is attached to the opening 42 of the mold stator 4, and the cap 14 is attached to the outer side of the bracket 15. Consequently, the manufacture of the motor 1 is completed.

### (Function)

Next, the function to reduce vibration and noise in the first embodiment will be described. In the consequent-pole rotor 2, the magnetic flux density at the magnet magnetic pole P1 where the magnet 23 is provided is greater than the magnetic flux density at the virtual magnetic pole P2 where the magnet 23 is not provided.

Thus, the magnetic attractive force acting between the rotor 2 and the teeth 51b of the stator 5 is larger at the magnet magnetic pole P1 and smaller at the virtual magnetic pole P2. Thus, when the rotor 2 rotates, an excitation force in the radial direction applied to the rotor 2.

The excitation force in the radial direction applied to the rotor 2 causes vibration and noise of the motor 1. In order to reduce vibration and noise of the motor 1, it is proposed to enhance the strength of the mold resin part 40 by increasing the amount of the mold resin, but this leads to an increase in the manufacturing cost.

For this reason, in the first embodiment, the stator 5 and the reinforcing member 3 are integrally molded with the mold resin part 40. The reinforcing member 3 is formed of a material having a higher tensile strength than the mold resin part 40.

The mold resin part 40 is formed of, for example, BMC or PBT as described above. The tensile strength of BMC is 50 to 250 MPa. The tensile strength of PBT is 50 to 250 MPa.

Meanwhile, the reinforcing member 3 is formed of, for example, iron or aluminum. The tensile strength of iron is 400 to 600 MPa. The tensile strength of aluminum is 300 to 500 MPa.

Since the reinforcing member 3 having a high tensile strength and the stator 5 are integrally molded using the mold resin as described above, the resistance to vibration caused when the rotor 2 rotates can be improved. Consequently, vibration and noise of the motor 1 can be reduced.

Since it is not necessary to increase the use amount of mold resin, an increase in the manufacturing cost can be suppressed.

The reinforcing member 3 is formed of iron or aluminum in this example, but may be formed of other metal or may be formed of a resin, as long as the reinforcing member 3 has a higher tensile strength than the mold resin part 40. Also in this case, the resistance to vibration can be improved, and vibration and noise of the motor 1 can be reduced.

Next, functions other than the reduction of vibration and noise will be described. As described above, the mold resin part 40 is formed of a resin such as BMC or PBT, while the reinforcing member 3 is formed of a metal such as iron or aluminum.

The thermal conductivity of BMC is 0.1 to 1 W/m·K, and the thermal conductivity of PBT is 0.1 to 1 W/m·K. In contrast, the thermal conductivity of iron is 30 to 80 W/m·K, and the thermal conductivity of aluminum is 80 to 300 W/m·K.

Since the thermal conductivity of the reinforcing member 3 is higher than the thermal conductivity of the mold resin part 40 as above, heat generated in the coils 53 and the circuit board 6 of the motor 1 can be efficiently dissipated to the outside of the motor 1 via the reinforcing member 3. Thus, an increase in the temperature of the motor 1 is suppressed.

The mold resin part 40 may be formed of a nonmagnetic resin such as BMC. Thus, magnetic flux leakage to the outside of the motor 1 can be suppressed by the mold resin part 40. By suppressing the leakage magnetic flux in this way, the motor efficiency can be improved.

Since the reinforcing member 3 has the attachment portions 33 while the mold resin part 40 has the attachment legs 45, the attachment portions 33 and 46 can be used as insertion holes for the screws 48 (FIG. 15(B)).

### (Effects of Embodiment)

As described above, the motor 1 of the first embodiment includes the rotor 2, the stator 5, the reinforcing member 3, and the mold resin part 40 that covers the stator 5 and the reinforcing member 3. The tensile strength of the reinforcing member 3 is higher than the tensile strength of the mold resin part 40. Thus, the resistance to vibration can be improved, and vibration and noise of the motor 1 can be reduced.

Since the stator 5 and the reinforcing member 3 are covered with the mold resin part 40, processes such as screwing or press-fitting can be eliminated. Thus, the number of processes can be reduced, as compared with the case where the reinforcing member 3 is attached to the mold stator 4 from outside.

In particular, since the reinforcing member 3 is formed of a metal such as iron or aluminum, the resistance to vibration can be improved, and the effect of reducing vibration and noise can be enhanced.

The thermal conductivity of the reinforcing member 3 is higher than the thermal conductivity of the mold resin part 40, so that heat generated in the motor 1 can be dissipated to the outside through the reinforcing member 3.

Since the mold resin part 40 is nonmagnetic, the magnetic flux leakage to the outside of the motor 1 can be suppressed, and the motor efficiency can be improved.

Since the mold resin part 40 is formed of a thermosetting resin such as BMC, it is possible to obtain high dimensional stability. Thus, the balance in the shape and weight of the mold resin part 40 can be improved, and the quietness of the motor 1 can be enhanced. When the mold resin part 40 is formed of a thermoplastic resin such as PBT, the mold resin can be reused.

Since the reinforcing member 3 is supported by the board holding member 7, a common member can be used to prevent deformation of the circuit board 6 and to support the reinforcing member 3 during molding.

The reinforcing member 3 has the leg portions 32 (first portion) covered with the mold resin part 40 and the main portion 30 and the flange portion 31 (second portion) which are exposed from the mold resin part 40. Thus, heat generated in the motor 1 can be dissipated to the outside through the exposed portion of the reinforcing member 3, and the heat dissipation effect can be enhanced.

The attachment portion 33, which has the inner circumferential surface parallel to the axis C1, is formed on the leg portion 32, and thus the stator assembly 50 can be positioned within the mold 200 by bringing the inner circumferential surface of the attachment portion 33 into contact with the positioning pin 209 of the mold 200.

As the mold resin part 40 has the plurality of attachment portions 46 arranged at equal distances from the axis C1 while the reinforcing member 3 has the plurality of attachment portion 33 arranged at equal distances from the axis C1, the stator assembly 50 can be positioned even when the rotational position of the stator assembly 50 is changed in the mold 200.

Since each of the attachment portion 46 of the mold resin part 40 and the attachment portion 33 of the reinforcing member 3 has a circular shape or arc shape, the structure of the positioning pin 209 of the mold 200 can be simplified.

In addition, the rotor 2 is of the consequent-pole type which has the magnet magnetic poles P1 and the virtual magnetic poles P2 and in which the excitation force in the radial direction is likely to be generated, and thus the provision of the reinforcing member 3 is particularly effective in reducing vibration and noise.

Moreover, since the reinforcing member 3 is disposed on one side of the stator 5 in the axial direction, vibration and noise can be reduced without increasing the size of the motor 1 in the radial direction.

### Second Embodiment

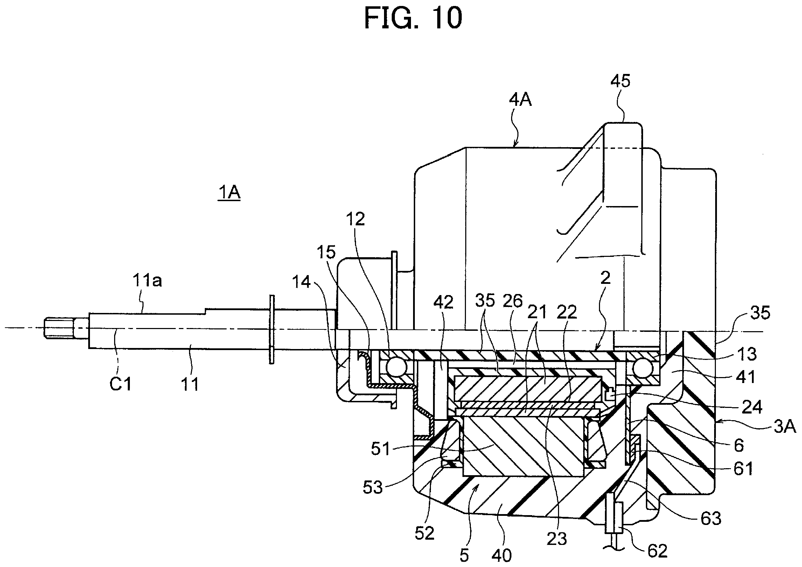

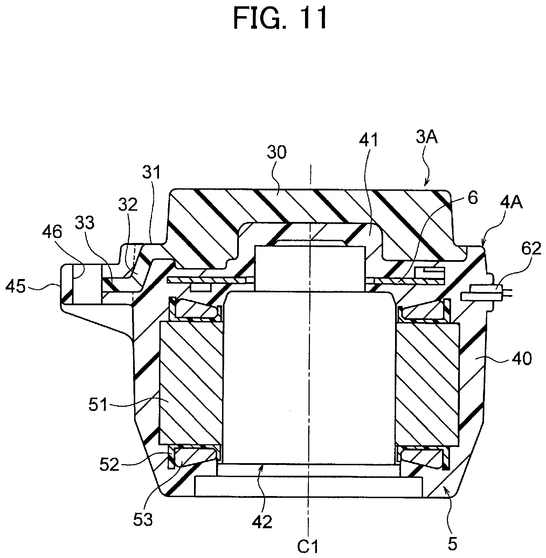

Next, a second embodiment will be described. FIG. 10 is a sectional view illustrating a motor 1A of the second embodiment. FIG. 11 is a sectional view illustrating a mold stator 4A of the second embodiment. The second embodiment differs from the first embodiment in the material of a reinforcing member 3A of the motor 1A. The shape of the reinforcing member 3A is the same as that of the reinforcing member 3 of the first embodiment.

The reinforcing member 3A of the second embodiment is formed of a material having a lower elastic modulus than that of the mold resin part 40. The mold resin part 40 is formed of, for example, BMC or PBT as described in the first embodiment. The elastic modulus of BMC is 3 to 20 GPa. The elastic modulus of PBT is 3 to 20 GPa.

Meanwhile, the reinforcing member 3A is formed of, for example, a rubber, more specifically silicone rubber. The elastic modulus of silicone rubber is 0.5 to 1.5 MPa.

Since the reinforcing member 3A is formed of a material having a lower elastic modulus than that of the mold resin part 40 as above, vibration caused when the rotor 2 rotates can be absorbed by the reinforcing member 3A. Thus, vibration and noise of the motor 1 can be reduced. In particular, a rubber such as silicone rubber has high vibration absorption performance and thus vibration and noise of the motor 1 can be effectively reduced.

The reinforcing member 3A is not limited to silicone rubber, but may be formed of any material having a lower elastic modulus than that of the mold resin part 40. In this regard, a rubber is desirable because it has high vibration absorption performance.

As described in the first embodiment, the effect of efficiently dissipating heat of the motor 1 to the outside can be achieved when the thermal conductivity of the reinforcing member 3A is higher than the thermal conductivity of the mold resin part 40.

The thermal conductivity of BMC is 0.1 to 1 W/m·K, and the thermal conductivity of PBT is 0.1 to 1 W/m·K. Meanwhile, the thermal conductivity of silicone rubber, which is an example of the reinforcing member 3A, is 1 to 5 W/m·K. Since the thermal conductivity of the reinforcing member 3A is higher than the thermal conductivity of the mold resin part 40 as described above, heat of the motor 1 can be efficiently dissipated to the outside.

When the heat resistance temperature of the reinforcing member 3A is higher than the molding temperature during molding, the molding described in the first embodiment can be performed.

The molding temperature in the molding process of the mold resin part 40 using BMC is 130 to 200°C, and the heat resistance temperature of silicone rubber is 100 to 350°C. By setting the heat resistance temperature of the reinforcing member 3A to be higher than the molding temperature of BMC within these temperature ranges, it is possible to mold the reinforcing member 3A integrally with the stator 5, the circuit board 6 (FIG. 6) and the like using the mold resin.

The molding temperature in the molding process of the mold resin part 40 using PBT is 230 to 280°C, and the heat resistance temperature of silicone rubber is 100 to 350°C. By setting the heat resistance temperature of the reinforcing member 3A to be higher than the molding temperature of PBT within these temperature ranges, it is possible to mold the reinforcing member 3A integrally with the stator 5, the circuit board 6 (FIG. 6) and the like using the mold resin.

The motor 1A of the second embodiment is configured in a similar manner to the motor 1 of the first embodiment except for the above-described points.

As described above, the motor 1A of the second embodiment has the rotor 2, the stator 5, the reinforcing member 3A, and the mold resin part 40 that covers the stator 5 and the reinforcing member 3A. The elastic modulus of the reinforcing member 3A is lower than the elastic modulus of the mold resin part 40. Consequently, vibration is absorbed in the reinforcing member 3A, and thus vibration and noise of the motor 1 can be reduced.

In particular, a rubber such as silicone rubber has high vibration absorption performance and thus vibration and noise of the motor 1 can be effectively reduced.

The thermal conductivity of the reinforcing member 3A is higher than the thermal conductivity of the mold resin part 40, so that the effect of dissipating heat of the motor 1 to the outside can be exhibited.

### Third Embodiment

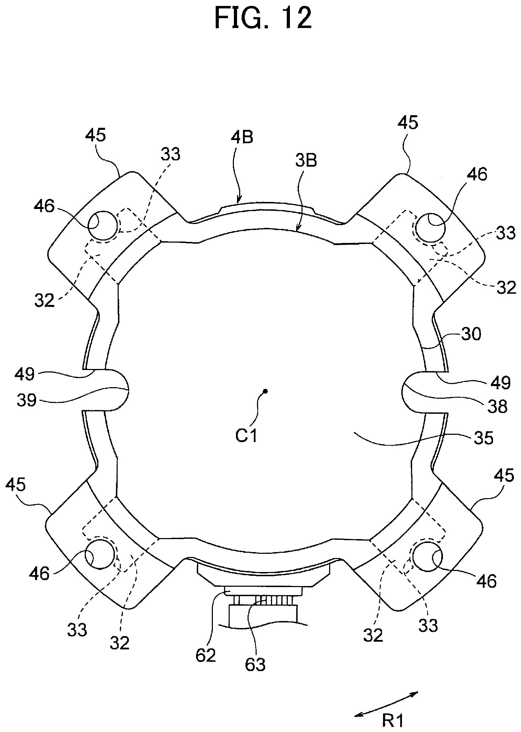

Next, a third embodiment will be described. FIG. 12 is a plan view illustrating a mold stator 4B of the third embodiment. The third embodiment differs from the first and second embodiments in the shape of a reinforcing member 3B and a mold resin part 40B.

Attachment portions 38, which are concave portions, are formed at an outer circumference of the reinforcing member 3B. An inner circumferential surface of each attachment portion 38 has an arc shape, more specifically a semicircular shape, in a plane orthogonal to the axial direction. The inner circumferential surface of the attachment portion 38 is parallel to the axial direction.

A plurality of attachment portions 38 of the reinforcing member 3B are formed at equal intervals in the circumferential direction. In this example, two attachment portions 38 are formed at intervals of 180 degrees about the axis C1.

During molding, the attachment portions 38 of the reinforcing member 3B can be brought into contact with the positioning members provided in the mold 200. Thus, the stator assembly 50 (FIG. 6) including the reinforcing member 3B can be positioned in the mold 200.

Attachment portions 49, which are concave portions, are formed in a position corresponding to the attachment portions 38 of the reinforcing member 3 in the mold resin part 40. An inner circumferential surface of each attachment portion 49 has an arc shape, more specifically a semicircular shape, in a plane orthogonal to the axial direction. The inner circumferential surface of the attachment portion 49 is parallel to the axial direction.

The attachment portions 49 of the mold resin part 40 are portions formed because a resin does not flow into areas where the positioning members of the mold 200 are present. That is, each attachment portion 38 of the reinforcing member 3B is a portion (second portion) exposed from the mold resin part 40.

The motor of the third embodiment is configured in a similar manner to the motor 1 of the first embodiment except for the points described above. It is also possible to use the reinforcing member 3A described in the second embodiment.

In the third embodiment, the stator assembly 50 (FIG. 6) including the reinforcing member 3B can be positioned in the mold 200 by bringing the attachment portions 38 of the reinforcing member 3B into contact with the positioning members of the mold 200. Thus, the positional accuracy of the stator assembly 50 in the mold 200 can be improved, and the dimensional accuracy of the motor 1 can be improved.

### Fourth Embodiment

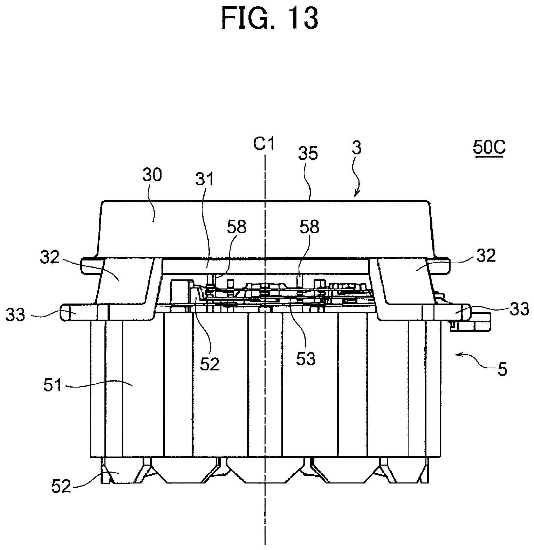

Next, a fourth embodiment will be described. FIG. 13 is a side view illustrating a stator assembly 50C of the fourth embodiment. In the above-described first embodiment, the reinforcing member 3 is supported by the board holding member 7 (FIG. 6).

In contrast, in the fourth embodiment, the reinforcing member 3 is supported by the stator 5 as illustrated in FIG. 13. More specifically, the reinforcing member 3 is supported by a plurality of protrusions 58 provided upright on the insulating portion 52 of the stator 5. By attaching the reinforcing member 3 onto the stator 5, the stator assembly 50C is formed.

The motor of the fourth embodiment is configured in a similar manner to the motor 1 of the first embodiment except for the points described above. It is also possible to use the reinforcing member 3A described in the second embodiment or the reinforcing member 3B described in the third embodiment.

The material of the reinforcing member 3B may be the same as that of the reinforcing member 3 of the first embodiment or may be the same as that of the reinforcing member 3A of the second embodiment. In the fourth embodiment, the circuit board 6 and the board holding member 7 are not provided.

By placing the stator assembly 50C in the mold 200 (FIG. 8) and performing molding, the stator 5 and the reinforcing member 3 can be integrally molded with the mold resin part 40 (FIG. 1).

In the fourth embodiment, the reinforcing member 3 is supported directly by the stator 5. Thus, in addition to the effects described in the first embodiment, the number of parts can be decreased, and the manufacturing cost can be reduced.

### Fifth Embodiment

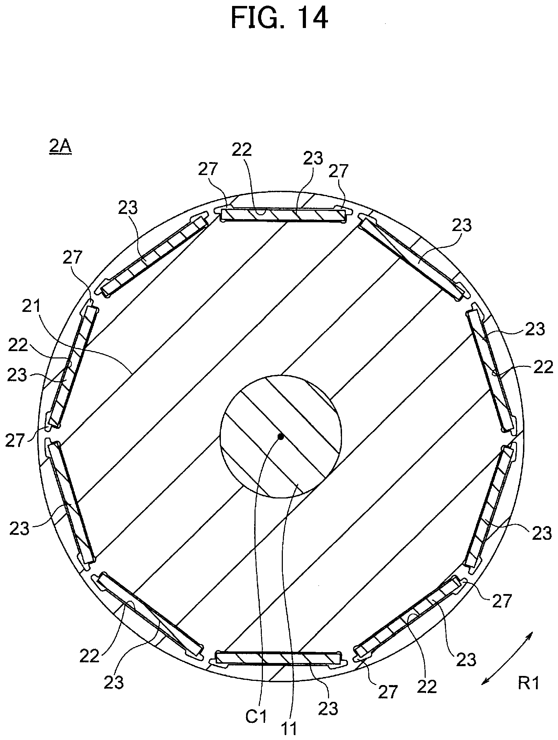

Next, a fifth embodiment will be described. FIG. 14 is a sectional view illustrating a rotor 2D of the fifth embodiment. The above-described rotor 2 (FIG. 2) of the above-described first embodiment is of a consequent-pole type that has the magnet magnetic poles and the virtual magnetic poles. In contrast, the rotor 2D of the fifth embodiment is of a non-consequent-pole type in which all the magnetic poles are formed by magnet magnetic poles.

The rotor 2D has a rotor core 21 having a cylindrical shape about the axis C1. The rotor core 21 is formed of a plurality of electromagnetic steel sheets which are stacked and fixed together in the axial direction by crimping, welding, or bonding. The sheet thickness of each electromagnetic steel sheet is, for example, 0.1 mm to 0.7 mm. The rotor core 21 has a central hole at its center in the radial direction, and the shaft 11 is fixed to the center hole.

The plurality of magnet insertion holes 22 is arranged in the rotor core 21 at equal intervals in the circumferential direction. The shape of each magnet insertion hole 22 is as described in the first embodiment. The flux barrier 27 is formed on each side of the magnet insertion hole 22 in the circumferential direction. The number of magnet insertion holes 22 is 10 in this example, but is not limited to 10.

The magnet 23 is inserted in each magnet insertion hole 22. The magnet 23 is in the form of a flat plate and has a rectangular shape in a plane orthogonal to the axial direction. The material and shape of the magnet 23 are as described in the first embodiment.

The magnets 23 adjacent to each other in the circumferential direction are arranged so that opposite magnetic poles face the outer circumferential side of the rotor core 21. Thus, all the magnetic poles of the rotor 2D are formed by the magnets 23. In this example, the rotor 2D has 10 magnets 23, and the number of magnetic poles of the rotor 2D is 10.

The non-consequent-pole rotor 2D has the magnets 23, the number of which is greater than the number of magnets in the consequent-pole rotor 2, but has an advantage that vibration and noise are less likely to occur.

The motor of the fifth embodiment is configured in a similar manner to the motor 1 of the first embodiment except for the points described above. It is also possible to use the reinforcing member 3A described in the second embodiment or the reinforcing member 3B described in the third embodiment. As described in the fourth embodiment, the reinforcing member 3 may be supported by the stator 5.

Even when the non-consequent-pole rotor 2D is used as above, vibration and noise of the motor 1 can be reduced by covering the stator 5 and the reinforcing member 3 with the mold resin part 40 and by making the tensile strength of the reinforcing member 3 higher than that of the mold resin part 40 or making the thermal conductivity of the reinforcing member 3 lower than that of the mold resin part 40.

### (Air Conditioner)

Next, an air conditioner to which the motor of each of the above embodiments is applied will be described. FIG. 15(A) is a diagram illustrating the configuration of an air conditioner 500 to which the motor 1 of the first embodiment is applied. The air conditioner 500 includes an outdoor unit 501, an indoor unit 502, and a refrigerant pipe 503 connecting these units 501 and 502.

The outdoor unit 501 has an outdoor fan 510 which is, for example, a propeller fan, a compressor 504, and a heat exchanger 507. The outdoor fan 510 includes the impeller 505 and the motor 1 driving the impeller 505. The configuration of the motor 1 is as described in the first embodiment.

FIG. 15(B) is a sectional view of the outdoor unit 501. The motor 1 is fixed to the frame 509 disposed in a housing 508 of the outdoor unit 501 by the screws 48. The impeller 505 is attached to the shaft 11 of the motor 1 via a hub 506.

In the outdoor fan 510, the rotation of the motor 1 causes the impeller 505 to rotate and blow air to the heat exchanger 507. During a cooling operation of the air conditioner 500, heat is released when the refrigerant compressed by the compressor 504 is condensed in the heat exchanger 507 (condenser), and this heat is released to the outside of a room by air-blowing of the outdoor fan 510.

The indoor unit 502 (FIG. 15(A)) has an indoor fan 520 which is, for example, a cross flow fan, and a heat exchanger 523. The indoor fan 520 has an impeller 521 and a motor 522 that drives the impeller 521.

In the indoor fan 520, the rotation of the motor 522 causes the impeller 521 to rotate and blow air to the inside of the room. During the cooling operation of the air conditioner 500, the refrigerant removes heat from the air as it evaporates in the heat exchanger 523 (evaporator), and the air is blown into the room by air-blowing of the indoor fan 520.

Since vibration and noise is reduced in the motor 1 described in the above first embodiment, the quietness of the outdoor fan 510 can be improved. Thus, the quietness of the air conditioner 500 can be improved.

Although the motor 1 of the first embodiment is used in the outdoor fan 510 in this example, it is sufficient that the motor 1 of the first embodiment is used in at least one of the outdoor fan 510 and the indoor fan 520. Instead of the motor 1 of the first embodiment, the motor of any one of the second to fifth embodiments may be used.

The motor 1 described in each of the first to fifth embodiments can be mounted on any electric apparatuses other than the fan of the air conditioner.

Although the desirable embodiments have been specifically described, the present disclosure is not limited to the above embodiments, and various modifications and changes can be made thereto.

### DESCRIPTION OF REFERENCE CHARACTERS

1,1A motor; 2 rotor; 3, 3A, 3B reinforcing member; 4 mold stator; 5 stator; 6 circuit board; 7 board holding member; 11 shaft; 21 rotor core; 30 main portion; 31 flange portion; 32 leg portion; 33 attachment portion; 35 surface; 36 recess; 38 attachment portion; 40 mold resin part; 41 bearing support portion; 42 opening; 45 attachment leg; 46 attachment portion; 48 screw; 49 attachment portion; 50 stator assembly; 51 stator core; 52 insulating portion; 53 coil; 56 protrusion; 57 terminal; 58 protrusion (support portion); 61 drive circuit; 200 mold; 201 upper mold; 202 lower mold; 203 reinforcing member housing; 204 cavity; 208 gate; 209 positioning pin; 210 contact surface; 500 air conditioner; 501 outdoor unit; 502 indoor unit; 503 refrigerant pipe; 505 impeller; 506 hub; 508 housing; 509 frame; 510 outdoor fan; 520 indoor fan; 521 impeller.

## Claims

1. A motor comprising:
a rotor;
a stator surrounding the rotor;
a reinforcing member; and
a mold resin part covering the stator and the reinforcing member,
wherein a tensile strength of the reinforcing member is higher than a tensile strength of the mold resin part.

2. The motor according to claim 1, wherein the reinforcing member is formed of a metal.

3. A motor comprising:
a rotor;
a stator surrounding the rotor;
a reinforcing member; and
a mold resin part covering the stator and the reinforcing member,
wherein an elastic modulus of the reinforcing member is lower than an elastic modulus of the mold resin part.

4. The motor according to claim 3, wherein the reinforcing member is formed of a rubber.

5. The motor according to any one of claims 1 to 4, wherein a thermal conductivity of the reinforcing member is higher than a thermal conductivity of the mold resin part.

6. The motor according to any one of claims 1 to 5, wherein the mold resin part is formed of a nonmagnetic resin.

7. The motor according to any one of claims 1 to 6, wherein the mold resin part is formed of a thermosetting resin.

8. The motor according to any one of claims 1 to 7, wherein the reinforcing member is supported by the stator.

9. The motor according to any one of claims 1 to 7, further comprising a support member provided between the stator and the reinforcing member,
wherein the reinforcing member is supported by the support member.

10. The motor according to any one of claims 1 to 9, wherein the reinforcing member has a first portion covered with the mold resin part and a second portion exposed from the mold resin part.

11. The motor according to claim 10, wherein the second portion has a surface parallel to a rotational axis of the rotor.

12. The motor according to any one of claims 1 to 11, wherein the mold resin part has a plurality of attachment portions, each of which is a hole or a concave portion, at equal distances from the rotational axis of the rotor, and
wherein the reinforcing member has a plurality of attachment portions, each of which is a hole or a concave portion, at equal distances from the rotational axis of the rotor.

13. The motor according to claim 12, wherein each of the plurality of attachment portions of the mold resin part has a circular or arc-shaped inner circumferential surface, and
wherein each of the plurality of attachment portions of the reinforcing member has a circular or arc-shaped inner circumferential surface.

14. The motor according to any one of claims 1 to 13, wherein the rotor has a rotor core and a permanent magnet attached to the rotor core, and
wherein the permanent magnet forms a magnet magnetic pole, and a part of the rotor core forms a virtual magnetic pole.

15. The motor according to any one of claims 1 to 14, wherein the reinforcing member is disposed on one side of the stator in a direction of the rotational axis of the rotor.

16. A fan comprising:
the motor according to any one of claims 1 to 15, and
an impeller rotated by the motor.

17. An air conditioner comprising:
an outdoor unit; and
an indoor unit connected to the outdoor unit via a refrigerant pipe,
wherein at least one of the outdoor unit and the indoor unit has the fan according to claim 16.
